# EUROPÄISCHE PATENTSCHRIFT

(11) **EP 0 503 159 B1**
(45) Veröffentlichungstag und Bekanntmachung des Hinweises auf die Patenterteilung: **16.08.1995**
(21) Anmeldenummer: 91122201.6
(22) Anmeldetag: 23.12.1991
(51) Int. Cl.: E03F 1/00, B64D 11/02

(54) **Vakuumabwassersystem an Bord eines Flugzeuges**
Vacuum sewage system for aircraft
Système à vide tout-à-l'égout pour un avion

(30) Priorität: 15.03.1991 DE 4108549
(43) Veröffentlichungstag der Anmeldung: 16.09.1992
(73) Patentinhaber: Daimler-Benz Aerospace Airbus Gesellschaft mit beschränkter Haftung, 21129 Hamburg (DE)
(72) Erfinder: Frank, Helge, W-2104 Hamburg 92 (DE)
(74) Vertreter: Hansmann, Dierk, Dipl.-Ing.

(56) Entgegenhaltungen:
- DE-A- 3 026 763
- FR-A- 2 308 742
- FR-A- 2 434 241

## Beschreibung

Die Erfindung bezieht sich auf ein Vakuumabwassersystem an Bord eines Flugzeuges nach dem Oberbegriff des Anspruchs 1.

Die DE-OS 26 15 244 zeigt ein Vakuumabwassersystem mit einem Sammelbehälter, wobei eine Umwälzpumpe den Inhalt des Sammelbehälters umwälzt, zerkleinert und lüfet, und in die Kreislaufbahn des Inhalts eine Flüssigkeitsstrahlpumpe eingeschaltet ist, die das für das Abwassersystem erforderliche Vakuum erzeugt. Dabei wird durch die Flüssigkeitsstrahlpumpe (Ejektor) ständig Luft in den Sammelbehälter gepumpt, die über eine Entlüftungsleitung abzuführen ist.

Darüber hinaus Zeigt die DE-OS 30 26 763 ein entsprechendes Toilettensystem für ein Flugzeug. Dabei wird der anfallende Unrat mittels eines innerhalb des Aufnahmetanksystems aufgebauten Vakuums befördert. Dieses Vakuum wird im Regelfalle durch das während des Fluges zwischen der Flugzeugkabine und der Umgebung herrschende Druckgefälle wirksam. In geringer Flughöhe und am Boden, wo kein entsprechendes Druckgefälle wirkt, wird der erforderliche Unterdruck durch eine Vakuumpumpe erzeugt. Dabei handelt es sich praktisch um ein elektrisch angetriebenes Gebläse. Der relativ niedrige Wirkungsgrad eines solchen Gebläses verursacht einen hohen Energieverbrauch, der wiederum eine leistungsfähige, also eine gewichts- und kostenintensive Installation erfordert. Aufgrund der hohen Betriebsdrehzahl sind besondere Vorkehrungen für den Fall einer Rotorauflösung notwendig. Außerdem ist das Gebläse eine Quelle lästiger Geräusche und Vibrationen. Das im Reiseflug bestehende Druckgefälle zwischen der Druckkabine und der Umgebung ist höher als für die Förderung der Abfälle erforderlich, was einen hohen Geräuschpegel an den Toiletteneinläufen, einen hohen Kabinenluftverbrauch und bei kleinen Flugzeugen Schwankungen des Kabinendruckes bewirkt.

Bezüglich Geräuschbildung und Wirkungsgrad bietet ein System mit einem Ejektor gemäß dem eingangs genannten Dokument zwar Vorteile, aber diese für stationäre Anlagen bestimmte Lösung ist nicht ohne weiteres auf ein Flugzeug mit einer Druckkabine übertragbar. Hier würden sich Probleme mit der Entlüftungsleitung ergeben, da die betreffende Abluft nicht in die Kabine eingeleitet werden darf. Auch ein Ableiten der Entlüftung nach außenbords würde nicht weiterhelfen, da dann eine einwandfreie Funktion des Systems infolge des besagten Druckgefälles nicht gegeben wäre.

Daher liegt der Erfindung die Aufgabe zugrunde, ein gattungsgemäßes Abwassersystem so auszubilden, daß dieses einen Ejektorbetrieb an Bord eines Flugzeuges mit einer Druckkabine ermöglicht.

Diese Aufgabe wird bei einem gattungsgemäßen Abwassersystem durch die kennzeichnenden Merkmale des Patentanspruchs 1 gelöst.

Dabei ist gegenüber bisherigen Awassersystemen für Flugzeuge insbesondere von Vorteil, daß der Abfallsammeltank weder auf Unterdruck noch auf Überdruck zu dimensionieren ist und der Unterdruck innerhalb des Abfallsammeltanks im Bodenbetrieb nicht vor jeder Benutzung neu aufgebaut werden muß.

Vorteilhafte Weiterbildungen der Erfindung sind in den Unteransprüchen angegeben.

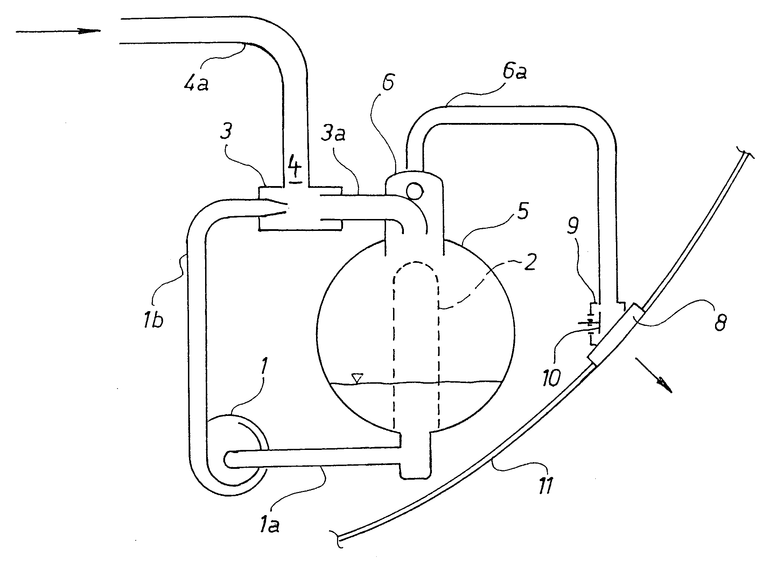

Die Erfindung ist in der Zeichnung dargestellt und nachfolgend näher erläutert. Das Abwassersystem umfaßt eine Pumpe 1, die über eine Saugleitung 1a mit einem innerhalb eines Abfallsammeltanks 5 angeordneten Filter 2 und über eine Druckleitung 1b mit der Düse eines Ejektors 3 verbunden ist. Der Trichter des Ejektors 3 ist über einen Rückfluß 3a mit dem Abfallsammeltank 5 verbunden, wobei der Abfallsammeltank 5 ferner über einen Wasserabscheider 6 mit einer Abluftleitung 6a verbunden ist. Der durch den Ejektor 3 erzeugte Unterdruck steht an dessen Saugstutzen 4 zur Verfügung. An den Saugstutzen 4 ist eine Sammelleitung 4a angeschlossen, die mit den Toilettenbecken in Verbindung steht. Die Abluftleitung 6a ist mit einem Rumpfauslaßventil 8 verbunden, dem eine Kammer 9 mit einem Rückschlagventil 10 vorgeschaltet ist.

Durch Einschalten der Pumpe 1 wird die Einrichtung in Betrieb genommen. Hierdurch strömt gefiltertes Schmutzwasser vom Abfallsammeltank 5 zum Ejektor 3, den es über den Rückfluß 3a verläßt und wieder in den Abfallsammeltank 5 zurückfließt. Beim Durchströmen des Ejektors reißt der Wasserstrahl Luftpartikel mit, so daS im Saugstutzen 4 der erwünschte Unterdruck auftritt. Die in den Abfallsammeltank 5 geförderte Luft gelangt über den Wasserabscheider 6 und die Abluftleitung 6a zum Rumpfauslaßventil 8. Dieses ist Bestandteil der Kabinendruckanlage und stellt sicher, daß laufend ein bestimmter Anteil der Kabinenluft durch die Rumpfaußenhaut 11 nach außen abgeführt wird, damit diese durch frische Luft ersetzt werden kann. Hierzu wird das Rumpfauslaßventil 8 automatisch so gesteuert, daS die Abgabe von Kabinenluft in Abhängigkeit von den unterschiedlichen Betriebsbedingungen der Klimaanlage erfolgt. Um ein optimales Zusammenwirken der Einrichtung mit dem Rumpfauslaßventil 8 zu gewährleisten, ist das Rückschlagventil 10 so bemessen, daS der Luftdruck innerhalb der Kammer 9 praktisch dem Luftdruck innerhalb der Kabine entspricht. Damit gelangen sowohl die abzuführende Kabinenluft als auch die über die Abluftleitung 6a ankommende Luft über das Rumpfauslaßventil 8 nach außenbords.

Bei der Pumpe 1 handelt es sich um eine elektrisch angetriebene Kreiselpumpe. Diese zeichnet sich gegenüber einem Luftgebläse durch eine geringere Geräuschentwicklung sowie durch einen geringeren Platzbedarf aus. Auch hinsichtlich des Energieverbrauches bietet die Lösung mit einer Kreiselpumpe Vorteile, da diese im Vergleich mit einem Gebläse zur Erzielung der gleichen Wirkung mit geringerer Leistung auskommt. Die Betriebsdrehzahl der Pumpe ist niedriger als die eines entsprechenden Luftgebläses, so daß eine mögliche Rotorauflösung für die Auslegung des Systems nicht maßgebend ist. Vorteilhaft bei der vorgeschlagenen Lösung ist weiterhin, daß im Reiseflug kein unnötig hoher Verlust an klimatisierter Kabinenluft eintritt, wie dies bei Systemen mit Ausnutzung des zwischen der Druckkabine und der Umgebung bestehenden Druckgefälles geschieht. Ein weiterer Vorteil der gezeigten Lösung besteht darin, daS auf die Wandung des Abfallsammeltanks 5 praktisch keine Druckdifferenz wirkt, was ein günstiges Tankgewicht zur Folge hat.

Anhand des Filters 2 wird erreicht, daß der durch die Druckleitung 1b zum Ejektor 3 geförderte Schmutzwassersrom einen möglichst geringen Anteil an Schwebestoffen aufweist. Hierdurch wird die Zuverlässigkeit des Ejektors erhöht.

Eine ähnlich vorteilhafte Wirkung hat auch der Wasserabscheider 6. Dieser bewirkt nämlich, daß möglicherweise innerhalb des Abfallsammeltanks 5 schwebende Wassertröpfchen nicht in die Abluftleitung 6a eintreten können. Dies führt zu einer höheren Betriebssicherheit des Rumpfauslaßventils 8 und des Rückschlagventils 10.

## Patentansprüche

1. Vakuumabwassersystem an Bord eines Flugzeuges, wobei zum Erzeugen eines Unterdrucks ein Ejektor vorgesehen ist, und der Unterdruck im wesentlichen zum Fördern von Abfallstoffen von dem oder den Toilettenbecken in einen Abfallsammeltank dient und während des Reisefluges zwischen der Flugzeugkabine und der Umgebung ein Druckgefälle besteht und eine Pumpe vorgesehen ist, die über eine Saugleitung mit dem Abfallsammeltank und über eine Druckleitung mit der Düse eines Ejektors verbunden ist, wobei der Trichter des Ejektors über einen Rückfluß mit dem Abfallsammeltank verbunden ist, dadurch **gekennzeichnet**, daß der Abfallsammeltank (5) über eine Abluftleitung (6a) mit einem Rumpfauslaßventil (8) in Verbindung steht, wobei dem Rumpfauslaßventil eine Kammer (9) mit einem Rückschlagventil (10) vorgeschaltet ist.

2. Vakuumabwassersystem nach Anspruch 1, dadurch **gekennzeichnet**, daß die Saugleitung (1a) mit einem innerhalb des Abfallsammeltanks (5) angeordneten Filter (2) verbunden ist.

3. Vakuumabwassersystem nach Anspruch 1 oder 2, dadurch **gekennzeichnet**, daß der Abfallsammeltank (5) einen Wasserabscheider (6) aufweist, der mit der Abluftleitung (6a) verbunden ist.

## Claims

1. Vacuum waste water system on board an aircraft, wherein an ejector is provided for generating a negative pressure which essentially serves to convey waste materials from the toilet basin or basins into a waste-collecting tank, a pressure gradient exists, during flight, between the cabin of the aircraft and the environment, and a pump is provided which is connected to the waste-collecting tank via a suction line and to the nozzle of an ejector via a pressure line, the funnel of the ejector being connected to the waste-collecting tank via a return flow,
characterized in that the waste-collecting tank (5) is in communication, via a waste air line (6a), with an outlet valve (8) in the fuselage, upstream of which there is connected a chamber (9) with a non-return valve (10).

2. Vacuum waste water system according to Claim 1, characterized in that the suction line (1a) is connected to a filter (2) disposed inside the waste-collecting tank (5).

3. Vacuum waste water system according to Claim 1 or 2, characterized in that the waste-collecting tank (5) has a water-separator (6) which is connected to the waste air line (6a).

## Revendications

1. Système de traitement sous vide des eaux usées à bord d'un avion, dans le cas duquel un éjecteur est prévu afin de produire une dépression servant principalement à refouler les matières fécales provenant de la ou des toilettes vers un réservoir de collecte des matières fécales, une chute de pression étant enregistrée au cours du vol entre la cabine de l'avion et les alentours, de même qu'il est prévu une pompe, laquelle étant reliée via une conduite d'aspiration avec le réservoir de collecte des matières fécales et via une conduite sous pression avec la tuyère d'un éjecteur, la trémie de l'éjecteur étant reliée au réservoir de collecte des matières fécales via un refoulement, caractérisé en ce que le réservoir de collecte des matières fécales (5) est en relation avec une soupape de décharge placée sur le fuselage (8) via une conduite d'aération (6a), une chambre (9) pourvue d'une soupape de non-retour (10) étant placée en amont de la soupape de décharge placée sur le fuselage.

2. Système de traitement sous vide des eaux usées selon la revendication 1, caractérisé en ce que la conduite d'aspiration (1a) est reliée à un filtre (2) disposé à l'intérieur du réservoir de collecte de matières fécales (5).

3. Système de traitement sous vide des eaux usées selon l'une ou l'autre des revendications 1 et 2, caractérisé en ce que le réservoir de collecte de matières fécales présente un purgeur (6), lequel est relié à la conduite d'aération (6a).
